# EUROPEAN PATENT APPLICATION

(11) **EP 2 500 214 A2**
(43) Date of publication of application: **19.09.2012**
(21) Application number: 12275025.0
(22) Date of filing: 16.03.2012
(51) Int. Cl.: B60Q 1/26, B60Q 1/52, E01F 9/012, B60Q 7/00

(54) **Vehicle emergency safety light**

(30) Priority: 16.03.2011 US 201161453166 P
(71) Applicant: The St. Christopher Project, LLC, Morrisville, NC 27560 (US)
(72) Inventor: McMeekin, Nancy Marshall, Morrisville, NC North Carolina 27560 (US); McMeekin, Robert L, Morrisville, NC North Carolina 27560 (US); Daniel, George, Carrboro, NC North Carolina 27510 (US)
(74) Representative: Johnson, Yvonne Catherine

(57) **Abstract**

The present invention relates to an emergency vehicle light (1)51) for deploying in emergency situations wherein the light is positioned higher than the top or highest point of the vehicle. By utilizing segmented poles (5,30,53a) which can semi-automatically or automatically assemble with the light at the top of the pole, the light will be positioned for viewing at a height combining the vehicle and device height, thus being able to be seen from a long distance away.

## Description

### BACKGROUND OF THE INVENTION

### Field of the Invention

The present invention relates to an emergency light for use independent of a vehicle. In particular, it relates to a semi-automatically or automatically extending vehicle light sufficient to raise the light high enough to be seen at a distance.

### Description of Related Art

In the situation where a vehicle, such as a car or truck, has an accident or is otherwise inoperable or in trouble, the use of emergency safety lights, reflectors, and the like have been utilized to warn other drivers that they are approaching a dangerous situation and be alert to prevent potential accidents. A vehicle's emergency 4-way flashers are designed for this function but are of limited value since they can easily be disabled in a crash and are difficult to be seen because of their low height.

Typically, emergency lights are either hand held devices or are placed on the ground a few feet or yards before the vehicle to give warning to other vehicles in time for them to make a course correction and to increase visibility and awareness of the situation. Reflectors have the problem of usually being small and not as effective as lights. Lights provide something that can be seen better but lights operated by the vehicle power system become useless when an accident occurs. Another problem is that if the emergency occurs near a hill, ground based emergency lights and reflectors will not be seen until it is too late to take evasive action. Because the emergency light must be kept in the vehicle, typically a car trunk or glove box, size becomes a problem in that one needs to store the light until it is needed. A storage size greater than about 1 to 3 feet for a light makes it difficult to store. If lights are bulky and heavy, they become impractical for many people to use. Further, in an accident with injuries, a manual means of raising a light may be difficult if not impossible to actuate and utilize.

### BRIEF SUMMARY OF THE INVENTION

The present invention, in its embodiments, solves the above problems with emergency lights. The self assembly of a shock corded pole makes semi-manual deployment possible where an injury would otherwise prevent deployment of a tall structure. The automatic, attached to the car version allows for deployment even when the driver is unconscious, in both cases leading to a safer warning light accident or disabled vehicle situation than prior art lights.

In one embodiment of the present invention there is disclosed a vehicle emergency safety light for use on the top of the vehicle comprising:
a) a base having an upper and lower surface;
b) a plurality of feet on the lower surface of the base positioned for sitting on top of the vehicle;
c) a multi-segmented support pole having a shock corded semi-automatic self assembly, the pole having a first end and a second end, the first end attached to the upper surface of the base, the second end extending upward from the upper surface of the base; and
d) an LED light fixture mounted at the second end of the support pole having one or more LED lights powered by a self contained battery system.
The following features may apply to the vehicle emergency safety light for use on the top of the vehicle in accordance with the invention:
- There may be at least 2 LED lights in the light fixture.
- Each segment of the pole may be about one to three feet in length.
- The base may be triangular shaped and has three feet.
- There may be magnets on the feet designed for attaching the base to a vehicle.
- The feet may be leveling feet.
- The feet may be magnetic.
- There may be at least one LED shining upward in the light fixture.
- The pole may be attached to the base and light via the shock cord.
- The pole segments may wrap around the base during storage of the light.
- The light may be attached to the base lower surface during storage of the light.

In one particular embodiment, there is a vehicle emergency safety light comprising:
(a) a base having an upper and lower surface;
(b) a plurality of feet on the lower surface of the base, positioned for sitting on top of the vehicle;
(c) a multi-segmented support pole having a shock corded semi-automatic self assembly, whereby the support pole is hollow and comprises two or more pole segments, with there being an elastic cord running inside the hollow portion of the pole segments, with the elastic cord being under stretched tension when the pole segments are apart and the elastic cord being more relaxed when the pole segments together form a complete pole, such that when the pole segments are let go, they automatically form a complete pole, and wherein the pole has a first end and a second end, the first end being attached to the upper surface of the base, and the second end extending upward from the upper surface of the base; and
(d) an LED light fixture mounted at the second end of the support pole, having one or more LED lights powered by a self contained power system (such as a self contained battery system).

In yet another embodiment of the present invention there is a vehicle emergency safety light comprising a vehicle, having mounted therein:
a) a multi-segmented support pole having automatic self assembly or extension, the assembly or extension triggered by an accident sensor in the car or a manual switch, the pole having a first end and a second end, the first end attached to a fixed position in the vehicle;
b) an LED light fixture mounted at the second end of the support pole having one or more LED lights powered by a battery system which turns on triggered by the accident sensor or manual switch; and
c) wherein the pole when extended or assembled is extended higher than a highest point of the vehicle.
The following features may apply to the vehicle emergency safety light comprising a vehicle in accordance with the invention:
- The accident sensor may be triggered by the deployment of a vehicle air bag.
- The battery system may be separate from a battery system for the vehicle.
- The battery system may be self contained.

In one particular embodiment, there is a vehicle emergency safety light device comprising a vehicle, having mounted therein:
(a) a multi-segmented support pole having automatic self assembly or extension, whereby the support pole comprises two or more pole segments, with the assembly or extension of the segments to form a complete pole being triggered by an accident sensor in the car or by a manual switch, and wherein the pole has a first end and a second end, with the first end being attached to a fixed position in the vehicle; and
(b) an LED light fixture, mounted at the second end of the support pole, having one or more LED lights powered by a battery system which turns on when triggered by the accident sensor or manual switch;
wherein the pole, when extended or assembled to form the complete pole, extends higher than a highest point of the vehicle.

### BRIEF DESCRIPTION OF THE DRAWINGS

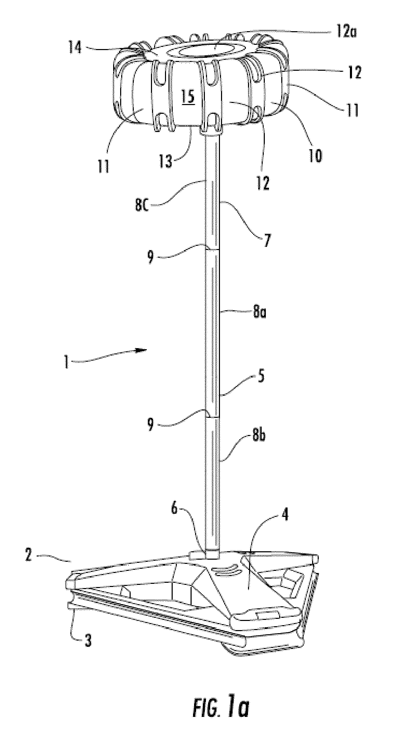

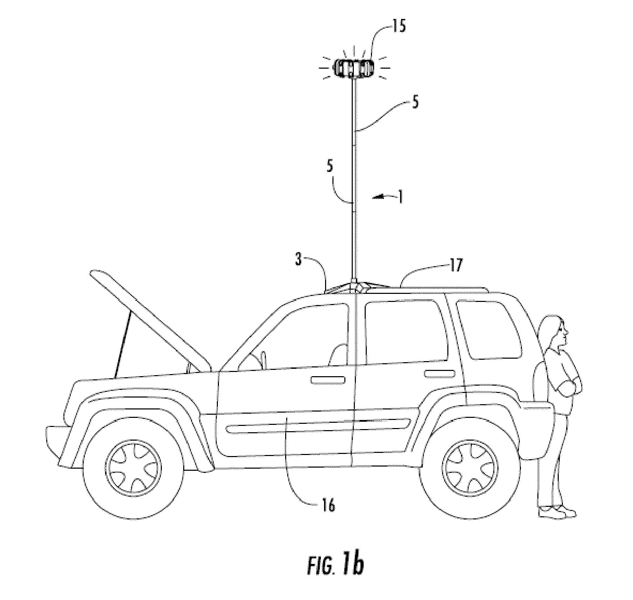

[008] Fig. 1 a is a view of a portable vehicle safety light of the present invention.

Fig. 1 b is a view of a portable vehicle safety light of the present invention on the roof of a vehicle.

Fig. 2 is a perspective view of a base.

Figs. 3a and 3b are side views of a folded and full length pole.

Fig. 4a is a frontal view of a light fixture.

Fig. 4b shows the light fixture mounted on the bottom of the base.

Fig. 5 is a side view of a vehicle fitted with an accident deploying emergency light.

### DETAILED DESCRIPTION OF THE INVENTION

While this invention is susceptible to embodiment in many different forms, there is shown in the drawings and will herein be described in detail specific embodiments, with the understanding that the present disclosure of such embodiments is to be considered as an example of the principles and not intended to limit the invention to the specific embodiments shown and described. In the description below, like reference numerals are used to describe the same, similar or corresponding parts in the several views of the drawings. This detailed description defines the meaning of the terms used herein and specifically describes embodiments in order for those skilled in the art to practice the invention.

The terms "a" or "an", as used herein, are defined as one or as more than one. The term "plurality", as used herein, is defined as two or as more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

Reference throughout this document to "one embodiment", "certain embodiments", and "an embodiment" or similar terms means that a particular feature, structure, or characteristic described in connection with the embodiment is included in at least one embodiment of the present invention. Thus, the appearances of such phrases or in various places throughout this specification are not necessarily all referring to the same embodiment. Furthermore, the particular features, structures, or characteristics may be combined in any suitable manner in one or more embodiments without limitation.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

The drawings featured in the figures are for the purpose of illustrating certain convenient embodiments of the present invention, and are not to be considered as limitation thereto. Term "means" preceding a present participle of an operation indicates a desired function for which there is one or more embodiments, i.e., one or more methods, devices, or apparatuses for achieving the desired function and that one skilled in the art could select from these or their equivalent in view of the disclosure herein and use of the term "means" is not intended to be limiting.

As used herein the phrase "vehicle emergency safety light" refers to a light designed to be used in an emergency situation with a vehicle, such as a car, truck, golf cart, motor cycle, bicycle, or the like, which stores small and has an automatic assembly function for use during the emergency situation. It is designed to be utilized on the vehicle and, in one embodiment, can be used next to the vehicle. The emergency light is designed to be tall enough to be seen from a longer distance than standard safety lights, for example, making it of sufficient height to either be taller than the height of the vehicle, or be placed on the vehicle and extended for at least 2 or 3 feet above the height of the vehicle (e.g. from 2 to 5 feet or from 3 to 5 feet above the height of the vehicle) or in one embodiment, 4 to 5 feet. In one embodiment, it is designed to be placed on the roof, trunk, hood, or other upper surface of the vehicle to add height to the light.

As used herein the "base" refers to a piece of the device of the present invention wherein the pole of the device can be attached for vertical placement of the pole. In one embodiment, it comprises a substantially planar surface having an upper and lower surface. In one embodiment, it is a substantially planar surface having an upper and lower surface. While it can be any shape, one embodiment that is useful is a triangular shape which aids in stability (see, for example, the figures). When the base is to be utilized on the ground, it should be large enough (of length and width) such that it is stable when placed on the ground. In one embodiment, the base has a width of about 12 to 24 inches. In one embodiment, the base has a length of about 12 to 24 inches. In other embodiments, it can be larger or smaller as needed. When the base is used on the vehicle, e.g. on the roof, it needs to be designed to attach to or conform to the surface of the vehicle.

In one embodiment, there are a plurality of "feet", on the lower surface of the base either for setting on the ground or for removably attaching to the vehicle. "Removably attaching" refers to quick attachment and removal for temporary use, as opposed to bolting or permanently attaching to the vehicle. In order to be a standing base with feet, there should be at least three feet spaced apart on the lower surface of the base, but more could be utilized - though minimizing the number of feet lowers the weight and space taken up during storage, which are useful embodiments of the present invention. The feet can also have attachment devices such as suction cups or magnets, or both, on each foot such that the device can be placed and removably attached on a portion of the vehicle, such as a metal roof, a trunk, hood, or the like to aid in getting the light as high as possible. One magnet or suction cup in one foot could get utilized, but in other embodiments two, three, or more magnets could be utilized as desired for stability, or two, three, or more suction cups could be utilized as desired for stability. In one embodiment, the feet are leveling feet, that is, their height can be adjusted to adjust for uneven surfaces on a vehicle or the ground.

In one embodiment, the base is actually the vehicle itself, where the pole is a self actuating, and automatic (in an accident), embodiment. In such a case, by attaching it through the body surface or attaching it with another attachment means, the pole portion can hide within the car body itself (such as an electric radio antennae that raises and lowers for utilizing the radio and has been used in the past prior to windshield antennae). In this embodiment, the light would be at the top of the pole.

The base must have a means for attaching the pole of the present invention. When it is a free-standing base for placing on the ground or car, there can be a hole, such as a centralized hole, that the pole's first end can be secured into (either pushed into, screwed into, or the like) such that the pole is positioned essentially perpendicular to the upper surface of the base, or the general plane of the base or ground where it is not otherwise flat. In one embodiment, the attachment is to a swivel type attachment wherein the free standing base is not placed on a level surface and the attachment can be adjusted such that the pole is as straight up and down as possible, and thus, reaches its maximum height. The attachment may be by any means which firmly attaches the pole to the base in addition to the above embodiments. The base hole can have a raised area (e.g. as shown in the figures) for reinforcing the hole when a pole is inserted therein.

As used herein the term "multi-segmented support pole" refers to poles, for example, hollow poles, for example, metal (such as aluminum), plastic, fiberglass, or the like, of a diameter sufficient to support the light fixture which is attached to the top (second end) of it. In one embodiment, they are about a quarter inch to about 2 inches in diameter. In one embodiment they are about a half inch to an inch in diameter. In one specific embodiment they are 3/8" - 1/2" in diameter. Usually, the pole used can be hollow, to sallow for the introduction of a shock cord and for the sake of lightness, easy assembly, and cost. There are at least two pole segments, but as many segments as desired can be utilized - the shorter the pole segments and the more segments, the smaller the disassembled pole can be. In one embodiment, the goal is to have pole segments shorter than about 3 feet, 2 feet, or a foot, as desired. In one embodiment, the assembled pole segments are a total of from about 1, 2, 3, or 4 to 5 feet in length. For example, the assembled pole segments may be a total of from about 2-5 or 3-5 or 4-5 feet in length. Each segment will be from about 6 inches to about 2 feet - 3 feet in length. In one embodiment they are from about 12 to 18 inches in length. The pole will have a first end which is used to insert or attach to the base (or mounted to the vehicle) and a second end to which the light fixture is mounted. The first end is shaped to be adapted to fit the attachment means of the base, such as having a screw end or tapered end for fitting in a hole, or adapted for a cotter pin or the like. Each segment of the pole is designed to be fitted against or into each segment such that when attached, they comprise a single pole with multi segments. Thus the assembled pole is made up of two or more pole segments, with each segment being fitted against or into its adjacent segment. Therefore, pole segments could be press fit into one another, snap fit, magnetic, or the like, or where there is an automatic version attached to the car, a motorized antennae type construction could be utilized.

In one embodiment of the invention, the pole segments are shock corded for semi-automatic assembly. That is, there is an elastic cord running inside the hollow portion of the pole segments such that when the pole segments are apart the elastic is under stretched tension and when the pole segments are let go, they automatically form a complete pole due to the shock cord attempting to move to a more relaxed position. The elastic cord may run inside the hollow portion of the pole segments from a location in a pole segment at or near to the pole's first end, to a location in a pole segment at or near to the pole's second end. When stored, the pole can be in a pulled-apart set of segments and these segments can be brought together to form a folded rather than linear configuration, e.g. it can be u-folded or v-folded, (possibly tied, or lock and loop fastened together, or otherwise secured, and it may be fit into the base, wound around the base or base feet, or the like, to prevent unwanted opening or forming of the pole for storage). A user merely holds one of the segments for deployment of the pole. The segments can be tested for good joints/connection, but an advantage of this method of semi-automating pole creation is that little, if any, adjustment of the pole segments and their connection is necessary, unlike the devices of the prior art which must be assembled. The shock cord can be attached to the base so that the pole cannot accidently be separated from the base, likewise it could be attached to the LED light fixture for the same reason. However, in other embodiments the extended pole may be produced by other mechanisms, e.g. the pole may be a motorized telescoping pole.

As used herein the term "LED light fixture" refers to a device consisting of one or more LED lights (of the same or differing colors) which when turned on, are always on or blinking and which have a means to have them turned on or off. A switch or an automatic turn on function could be utilized. The LEDs are powered by a self contained power system, that is, there is a battery within the device itself or the device utilizes the vehicle's battery. The batteries can be rechargeable or non-rechargeable. In one embodiment, there are batteries provided within the device that are separate from the car battery. In one embodiment, there are rechargeable batteries separate from the car battery and the device further comprises a device for charging the batteries from the automobile battery prior to use of the device. The light fixtures can have individual lights (LED light bulbs) facing in horizontal directions (horizontal to the ground) when deployed but in other embodiments there are also one or more LEDs facing upwards (perpendicular to the ground when in use). In general, any direction can be employed.

The light fixture is attached to the second end of the pole such that when the pole is extended or unfolded it is at the highest point of the device. That is, the base at the bottom, the extended pole segments in the middle, and the light fixture at the top. The fixture can be attached in the same or different manner as the pole to the base, such as screwing, snapping, push fitting, hook and loop fasteners, or the like. It can be attached in a permanent manner to the shock cord or removable. In one embodiment, the light fixture disassembles for storage, the shock cords folded and stored in or around the base, the light stored in the base, and the like.

In one embodiment of the invention, the device is not separate from the vehicle, but rather is permanently attached to the vehicle, such that the vehicle becomes the base for the pole and light of the present invention. In this embodiment, the extension of the pole (such as a motorized telescoping pole, a shock cord released by opening of an enclosure, or the like) is engaged by a sensor in the car sensing a crash. Since all autos and many other vehicles have air bags which are deployed upon an accident, the same sensor can be utilized to trigger the extension of the pole and/or turning on of the light. Since the accident technology exists, one could (alternatively or additionally) have a separate sensor which detects an accident (such as a fast braking situation or the like) and trigger the device. In this regard it could trigger extension of the pole and/or turning on of the light. Thus where a signal is received that an accident has occurred, a motorized pole would extend above the top of the vehicle and the light would automatically be turned on. The automatic device could have its own battery, such that if the vehicle is disabled, the safety light will still operate. The automatic device could have its own battery which is charged by the vehicle battery, such that if the vehicle is disabled, the safety light will still operate.

Now, referring to the drawings, Fig. 1a is the self contained portable version of a vehicle safety light. In this view vehicle safety light 1 consists of triangular base 2 with magnetic leveling feet 3. In one embodiment, it is about 15 inches on a side. In this embodiment, the triangular base 2 is about twelve inches on a side. Note the bases have an upper side 4. Positioned in the middle of the upper surface 4 is multi segmented pole 5. The pole 5 has first end 6 and second end 7. It also has in this view three segments 8a, 8b, and 8c which join at joint 9. While three segments are shown, more segments could be utilized. (Equally, only two segments could be utilized.) They are shock corded (not shown in this view) and automatically straighten during the assembly process once removed from storage. The first end in this embodiment is press fit into a receptacle in the base 2. On top of pole 5 at the second end 7 is light fixture 10. Light fixture 10 consists of an amber 11 and white 12 LED light on each side of the fixture (colors would be distinctive but could be other than white or amber) (round in this embodiment but the device could be round or any other shape) with on/off switch 13 and powered by battery 14 inside fixture compartment 15 (battery not shown but it is within the skill of the art for either rechargeable or non-rechargeable batteries being included). This embodiment depicts white LEDs facing upward, white lights 11 and 12 face horizontally around the light fixture.

Fig. 1 b shows the device of Fig. 1 a sitting mounted on car 16. The magnetic feet 3 hold device 1 to the roof 17 of vehicle 16.

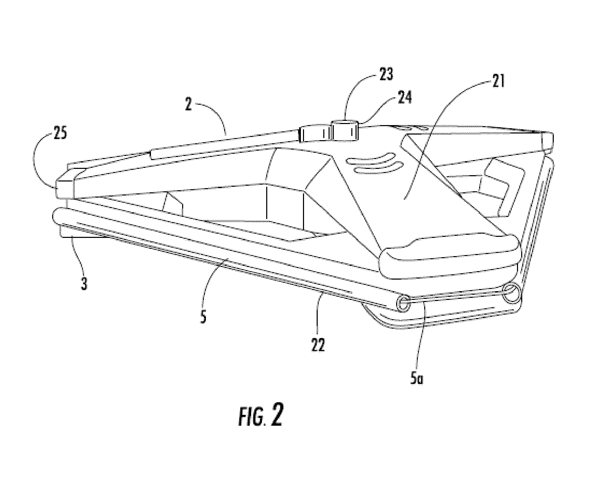

Fig. 2 depicts the base 2 separated from the rest of the device and consists of upper surface 21 and lower surface 22. It also has hole 23 for inserting a pole of the invention by pressure or screw fit. The hole has raised area 24 for reinforcing the hole when the pole is inserted therein. Magnetic base feet 3 (two of three which could be in one embodiment leveling), one under each corner 25 can also be seen. The feet do not need to be leveling where a level surface (e.g. vehicle roof top) is anticipated. Note shock corded 5a pole 5 is broken into segments and wrapped around base 2 for storage.

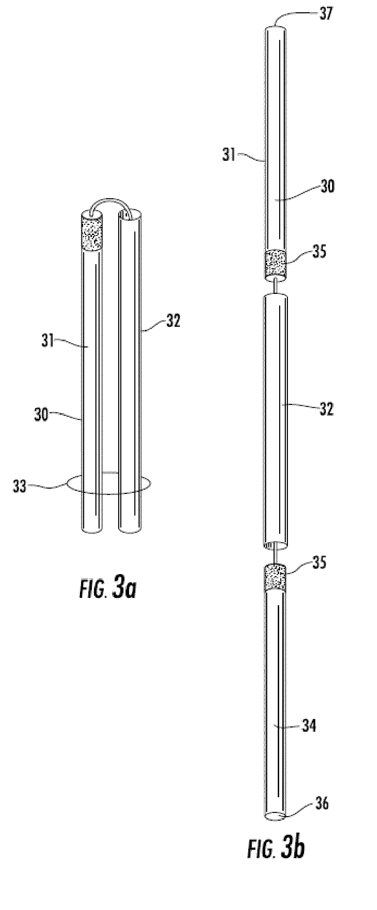

Fig. 3a and 3b show two embodiments of a pole of the present invention which is shock corded. Pole 30 has first segment 31 and second segment 32 (though as many segments as desired could be utilized similarly). In Fig. 3a, the pole is in the unassembled, v-folded, tense state for storage. The segments 31 and 32 are kept from assembling by being tied by tie 33. By manually holding one of the segments and removing the tie 33, the pole then automatically unfolds to the use state shown in Fig. 3b shown as a three segment pole 31, 32, and 34 where they are connected at reinforced areas 35 with one segment inserted into the end of another. First end 36 is inserted in a base and second end 37 will have the light fixture mounted to it.

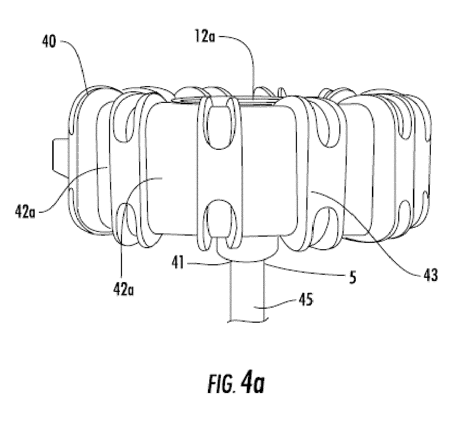

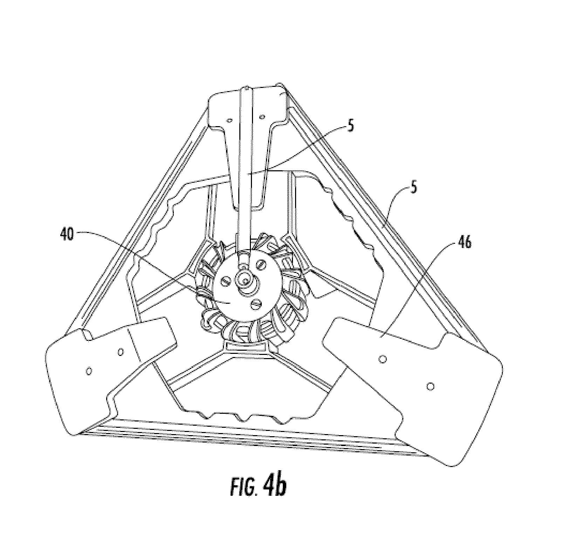

Fig. 4a shows the light fixture 40 attached to a pole 5 second end 41. The fixture 40 has sixteen LED lights around the sides 42a and a case 43. It also has four white LED lights 12a shining upward and an optional flag could be attached to pole 45. Fig. 4b depicts light fixture 40 attached to pole 5 and mounted to the underside 46 of the base for storage and transport.

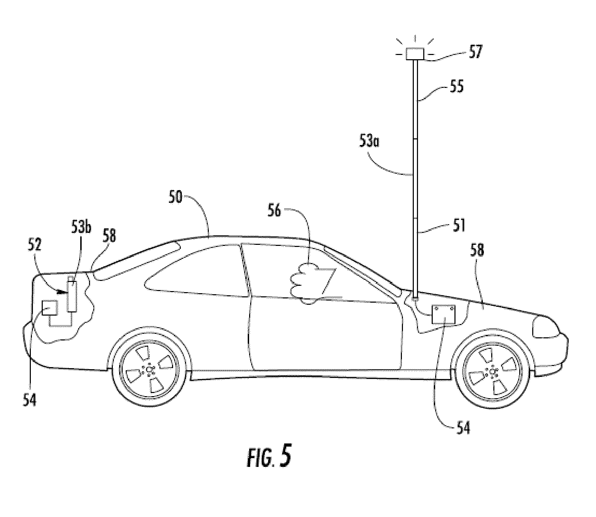

Fig. 5 shows two devices of the present invention wherein the vehicle (a car) is the base. One of the devices is in the extended position and one not yet deployed. In this view, automobile 50 has extended light 51 in the front fender and non-extended light 52 in the back fender. Each are mounted to the car 50 inside a fender 58 and in the closed position are essentially not visible and consist of a telescoping pole 53a (extended) and 53b (non-extended). In light 51 a motor 54 has powered the pole 55 to an up position based on the engagement of airbag 56 and also automatically turned on light fixture 57. In the other light, the motor has not powered the device and the pole is entirely within the fender 58.

Those skilled in the art to which the present invention pertains may make modifications resulting in other embodiments employing principles of the present invention without departing from its spirit or characteristics, particularly upon considering the foregoing teachings. Accordingly, the described embodiments are to be considered in all respects only as illustrative, and not restrictive, and the scope of the present invention is, therefore, indicated by the appended claims rather than by the foregoing description or drawings. Consequently, white the present invention has been described with reference to particular embodiments, modifications of structure, sequence, materials and the like apparent to those skilled in the art still fall within the scope of the invention as claimed by the applicant.

## Claims

1. A vehicle emergency safety light device comprising:
a) a base having an upper and lower surface;
b) a plurality of feet on the lower surface of the base, positioned for sitting on top of the vehicle;
c) a multi-segmented support pole having a shock corded semi-automatic self assembly, whereby the support pole is hollow and comprises two or more pole segments, with there being an elastic cord running inside the hollow portion of the pole segments, with the elastic cord being under stretched tension when the pole segments are apart and the elastic cord being more relaxed when the pole segments together form a complete pole, such that when the pole segments are let go, they automatically form a complete pole, and wherein the pole has a first end and a second end, the first end being attached to the upper surface of the base, and the second end extending upward from the upper surface of the base; and
d) an LED light fixture mounted at the second end of the support pole, having one or more LED lights powered by a self contained power system.

2. The light device according to claim 1 wherein there are at least two LED lights in the light fixture.

3. The light device according to claim 1 or claim 2 wherein each segment of the pole is from about one to three feet in length.

4. The light device according to claim 1, claim 2 or claim 3 wherein the base is triangular shaped and has three feet.

5. The light device according to claim 1, or any one of claims 2-4, wherein there are magnets on the feet designed for attaching the base to a vehicle or wherein the feet are magnetic.

6. The light device according to claim 1, or any one of claims 2-5, wherein the feet are leveling feet.

7. The light device according to claim 1, or any one of claims 2-6, wherein in the light fixture there is at least one LED shining upward.

8. The light device according to claim 1, or any one of claims 2-7, wherein the pole is attached to the base and light fixture via the shock cord.

9. The light device according to claim 1, or any one of claims 2-8, wherein the pole segments can wrap around the base during storage of the light.

10. The light device according to claim 1, or any one of claims 2-9, wherein the light fixture can be attached to the lower surface of the base during storage of the light.

11. The light device according to claim 1, or any one of claims 2-10, wherein the self contained power system (a) comprises a battery provided within the device itself or (b) powers the device utilizing the vehicle's battery.

12. A vehicle emergency safety light device comprising a vehicle, having mounted
therein:
a) a multi-segmented support pole having automatic self assembly or extension, whereby the support pole comprises two or more pole segments, with the assembly or extension of the segments to form a complete pole being triggered by an accident sensor in the car or by a manual switch, and wherein the pole has a first end and a second end, with the first end being attached to a fixed position in the vehicle; and
b) an LED light fixture, mounted at the second end of the support pole, having one or more LED lights powered by a battery system which turns on when triggered by the accident sensor or manual switch;
wherein the pole, when extended or assembled to form the complete pole, extends higher than a highest point of the vehicle.

13. The light device according to claim 12 wherein the accident sensor is triggered by the deployment of a vehicle air bag.

14. The light device according to claim 12 or claim 13, wherein the battery system of the vehicle emergency safety light is separate from a battery system for the vehicle or is a self contained battery within the device itself.

15. The light device according to claim 12, claim 13 or claim 14, wherein the multi-segmented support pole either (a) has a shock corded semi-automatic self assembly, whereby the support pole is hollow and with there being an elastic cord running inside the hollow portion of the pole segments, with the elastic cord being under stretched tension when the pole segments are apart and the elastic cord being more relaxed when the pole segments together form a complete pole, such that when the pole segments are let go, they automatically form a complete pole, or (b) is a motorized telescopically extending pole.
